# DEMANDE DE BREVET EUROPEEN

(11) **EP 0 812 051 A1**
(43) Date de publication de la demande: **10.12.1997**
(21) Numéro de dépôt: 97401252.8
(22) Date de dépôt: 04.06.1997
(51) Int. Cl.: H02K 11/00, H02K 23/66, H01C 1/012, H01C 1/034, H01C 3/12

(54) **Dispositif à résistance électrique, en particulier pour l'alimentation d'un moteur électrique**

(30) Priorité: 04.06.1996 FR 9606859; 23.05.1997 FR 9706352
(71) Demandeur: SOCIETE FINANCIERE D'ETUDE ET DE DEVELOPPEMENT INDUSTRIEL ET TECHNOLOGIQUE, 78280 Guyancourt (FR)
(72) Inventeur: Balan, Philippe, F-77090 Bussy Saint Georges (FR); Legrand, René, F-75020 Paris (FR)
(74) Mandataire: Schrimpf, Robert

(57) **Abrégé**

L'invention concerne un dispositif à résistance électrique, en particulier pour l'alimentation d'un moteur électrique.

Le dispositif comprend essentiellement une plaque de support (10) présentant au moins une face isolante, un circuit résistif constitué de segments résistifs (R) appliqué sur cette face, des bornes de connexion électrique (18) en liaison électrique avec les segments résistifs et des moyens (14 ; 24) pour protéger du milieu environnant le circuit résistif appliqué sur la plaque de support, en laissant les bornes de connexion apparentes, caractérisé en ce que chaque segment résistif (R) est découpé dans une feuille (12) de matière résistive.

L'invention s'applique notamment aux domaines de l'automobile et de l'électro-ménager.

## Description

L'invention concerne un dispositif à résistance électrique. destiné par exemple à être monté dans le circuit d'alimentation d'un moteur électrique ou à être utilisé comme résistance chauffante.

Des dispositifs de ce type sont utilisés en particulier dans les véhicules automobiles pour commander des ventilateurs dans des circuits d'aération et de chauffage ou de climatisation ou pour alimenter des moteurs d'entraînement de balais d'essuie-glace ou encore pour former des moyens de réchauffage d'éléments tels que des rétroviseurs, des lave-glace, des injecteurs, etc... et ils ont d'autres applications, par exemple en électro-ménager (bouilloires, cafetière électrique...).

On connaît des dispositifs à résistance électriques qui sont plats. étant essentiellement constitués d'une plaque de support présentant au moins une face isolante, un circuit résistif constitué de segments résistifs appliqué sur cette face, des bornes de connexion électrique en liaison électrique avec les segments résistifs et des moyens pour protéger du milieu environnant le circuit résistif appliqué sur la plaque de support en laissant les bornes de connexion apparentes.

Des exemples de réalisation de ce type de dispositif sont décrits dans les publications US 4 342 020, EP-A-0 363 191, et EP-A-0 573 265.

Dans ces exemples de réalisation, le circuit résistant est constitué par un revêtement réalisé in situ (impression, sérigraphie), ce qui pose des problèmes de coût de fabrication, de tenue et de performances.

L'invention a pour but d'apporter une solution simple, fiable et peu coûteuse à ces problèmes.

Elle propose à cet effet un dispositif du type défini plus haut mais dans lequel chaque segment résistif est découpé dans une feuille de matière résistive.

Dans des réalisations préférées, le dispositif présente encore une ou plusieurs des caractéristiques suivantes :
- chaque segment résistif comporte un rétrécissement local constituant un fusible d'intensité pour ce segment.
- les segments résistifs forment des pattes de connexion aptes à être appliquées sur les bornes de connexion et à leur être fixées.
- les segments résistifs sont découpés dans une même feuille et restent solidarisés par des ponts de matière aptes à être coupés après assemblage du dispositif.
- la plaque de support est constituée par une plaque métallique recouverte au moins sur ladite face d'un revêtement isolant.
- la plaque de support est enrobée d'un revêtement isolant.
- le revêtement isolant est un émail.
- la plaque de support est en oxyde d'alumine.
- chaque face de la plaque de support est isolante et certains au moins des segments résistifs sont repliés pour chevaucher les deux faces isolantes.
- chaque face de la plaque de support est isolante et des segments résistifs sont appliqués les uns sur une face de la plaque de support et les autres sur la face opposée de cette plaque.
- les segments résistifs sont soudés ou brasés individuellement aux bornes de connexion respectives.
- ledit recouvrement enrobe le dispositif à l'exception des bornes de connexion.
- le circuit résistif en place sur la plaque de support est protégé du milieu environnant par un recouvrement de matière imperméable et résistant à la chaleur.
- ledit recouvrement est un ciment réfractaire.
- le circuit résistif appliqué sur la plaque de support est protégé du milieu environnant par une plaque de protection.
- deux telles plaques de protection sont fixées l'une à l'autre pour constituer un boîtier contenant la plaque de support et les segments résistifs, à l'exception des bornes de connexion
- la plaque de protection est une plaque métallique revêtue d'un revêtement électrique isolant.
- la plaque support isolante porte localement un revêtement électro-conducteur pour constituer lesdites bornes de connexion.
- ledit revêtement électro-conducteur est constitué par des bandes (18) de matière électro-conductrice.
- ledit revêtement est appliqué sur des languettes formées dans la plaque de support.
- les bornes de connexion sont constitués dans une plaque de matière électro-conductrice où elles restent solidarisées par des ponts de matière qui sont aptes à être rompus après assemblage du dispositif.
- les bornes de connexion électriques sont encastrées dans des échancrures isolantes de la plaque de support.

Les bornes de connexion sont formées par exemple par dépôt de matière conductrice sur la face de la plaque support qui reçoit l'élément résistif, ou bien elles peuvent être formées par une plaque de matière électro-conductrice.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective éclatée d'un premier mode de réalisation de l'invention :
- les figures 2 et 3 sont des vues schématiques en coupe de deux autres modes de réalisation de l'invention :
- la figure 4 est une vue schématique en perspective éclatée d'un Quatrième mode de réalisation de l'invention ;
- la figure 5 est une vue en plan d'un exemple de réalisation des segments résistifs ;
- les figures 6 et 7 sont des vues en plan d'un exemple de réalisation de la plaque support et de la plaque conductrice encastrable dans la plaque support ; et

La figure 8 est une vue en plan d'un couple de plaques de fermeture.

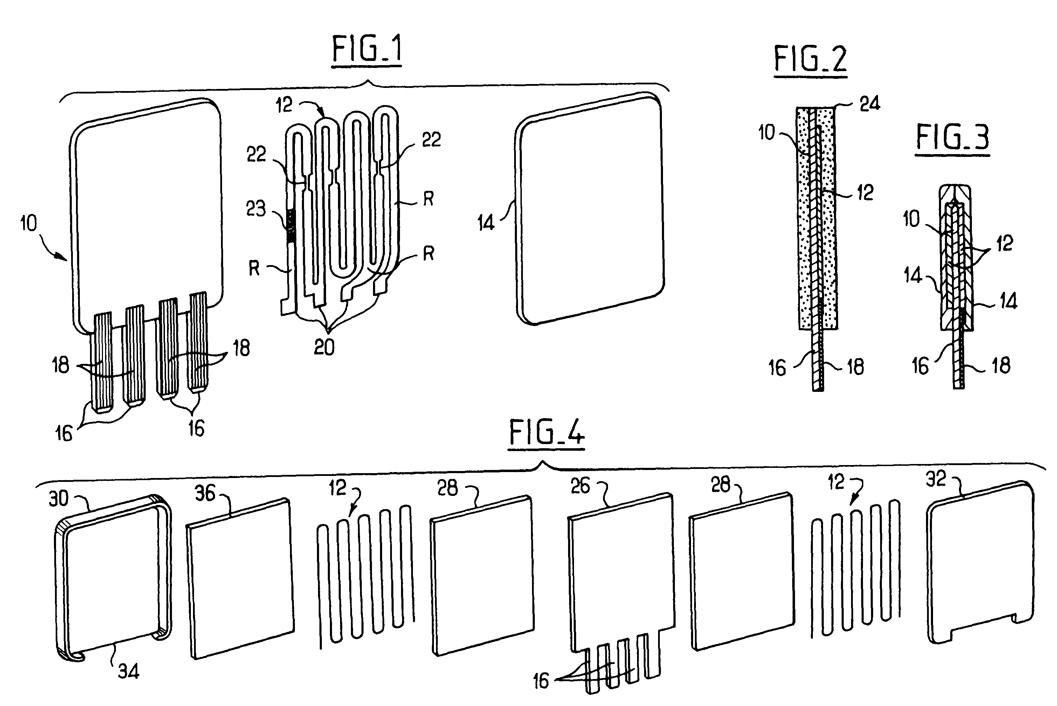

Le dispositif selon l'invention représenté en figure 1 comprend essentiellement une plaque support (10) un élément (12) de matière électro-conductrice à résistivité déterminée, formant la résistance électrique proprement dite, et une plaque (14) de recouvrement et de protection.

La plaque support (10) est une plaque métallique conformée sur un ou plusieurs de ses bords pour présenter des languettes (16) sur une face desquelles sont déposées des bandes (18) de matière électroconductrice à résistivité très faible. Les bandes avec les languettes sous-jacentes constituent des bornes de connexion. Les faces de la plaque (10) ont été au préalable rendues non électro-conductrices par oxydation ou par dépôt (trempage, projection au pistolet, sérigraphie. ...) d'un revêtement isolant (émail, vernis, peintre, etc...). La plaque (10) est par exemple en aluminium avec une couche superficielle d'alumine résistant à des tensions électriques relativement élevées (de l'ordre de 1000 volts par exemple). De préférence, la plaque (10) est une tôle recouverte d'un émail.

L'élément résistif (12) est découpé à la presse dans une feuille ou une tôle d'un métal électro-conducteur tel qu'un alliage nickel-chrome par exemple. L'élément résistif comporte des pattes de connexion (20) dont le nombre dépend du circuit électrique à réaliser et est égal au nombre des bandes (18) de la plaque (10), ces pattes (20) étant destinées à être appliquées sur les bandes (18) quand l'élément résistif (12) est posé sur la plaque (10).

La plaque de protection (14) a sensiblement les mêmes dimensions que la plaque support (10), mais est configurée pour laisser libre au moins une partie des bornes de connexion (18). Comme la plaque (10), la plaque de protection (14) est de préférence une plaque métallique dont les faces comportent un revêtement électriquement isolant (couche d'oxyde émail, vernis, peinture, etc...).

Pour l'assemblage du dispositif, l'élément résistif (12) est posé sur la face de la plaque support (10) qui porte les bandes de connexion (18), ses pattes (20) sont appliquées sur les extrémités desdites bandes (18), la liaison électrique étant maintenue soit par pression soit encore par soudure, brasures rivetage, collage par une colle conductrice ou par tout autre moyen approprié. Ensuite, la plaque (14) est posée sur l'ensemble ainsi constitué et sertie ou agrafée sur la plaque support (10), de façon à protéger entièrement l'élément résistif (12) et à le séparer du milieu environnant.

Éventuellement, une couche de matière d'enrobage électriquement isolante et résistant aux températures élevées est prévue entre la plaque support (10) et la plaque de protection (14).

Pour réduire les risques en cas de surintensité électrique ou d'échauffement anormal, au moins un fusible ou un coupe-circuit est incorporé à l'élément résistif.

Le fusible est avantageusement formé par rétrécissement des branches comme indiqué par exemple en (22) ce rétrécissement provoquant une réduction de section que l'on peut calibrer avec précision et déterminer en fonction de la surintensité électrique qui doit provoquer l'interruption du circuit. Un tel rétrécissement est avantageusement prévu dans chaque branche de l'élément résistif reliée à une borne de connexion, ces rétrécissements pouvant être différents les uns des autres. Par exemple dans le cas de l'alimentation d'un ventilateur à plusieurs vitesses pour circuit de chauffage ou de climatisation de véhicule automobile, on obtient une protection adaptée pour chaque vitesse de fonctionnement, ces protections étant indépendantes le unes des autres et indépendantes de la température environnante.

Dans le mode de réalisation de la figure 2, le dispositif est constitué de la plaque support (10) et de l'élément résistif (12) de la figure 1, qui sont recouverts d'une matière d'enrobage (24) ne laissant à nu que les bornes de connexion (16 + 18).La matière d'enrobage est par exemple un ciment réfractaire.

Dans les deux modes de réalisation des figures 1 et 2, on peut, si désiré, prévoir un élément résistif (12) sur chaque face de la plaque support (10). Il faut alors une deuxième plaque de protection (14) pour recuvrir ce deuxième élément résistif.

Dans le mode de réalisation de la figure 3, l'élément résistif (12) est plié en U et vient chevaucher la plaque support (10). Des plaques de protection (14) recouvrent les deux parties de l'élément résistif (12) qui sont appliquées sur les deux faces de la plaque support (10). Cette réalisation permet de réduire la hauteur du dispositif, donc son encombrement et de réduire également les pertes de charge quand ce dispositif est placé dans un flux d'air.

Dans le mode de réalisation de la figure 4, les languettes de connexion (16) sont formées sur un (ou sur plusieurs) bord d'une plaque (25) de métal électro-conducteur de part et d'autre de laquelle sont prévues deux plaques (28) de matière électriquement isolante. Des éléments résistifs (12) du même type que celui de la figure 1 sont placés de part et d'autre des plaques isolantes (28), leurs extrémités ou pattes de connexion étant fixées sur les languettes (16) de la plaque (26) par soudure, par brasure, par rivetage, par collage ou par tout autre moyen équivalent.

L'ensemble ainsi formé est logé à l'intérieur d'un boîtier métallique formé d'un fond (30) et d'un couvercle (32) destiné à être serti sur le fond (30).

Éventuellement, un bord de ce dernier peut comprendre une ouverture (34) de passage des languettes de connexion (16).

Le fond (30) et le couvercle (32) du boîtier peuvent être réalisés dans les matières déjà décrites pour des plaques (10) ou (14) de la figure 1. Éventuellement une autre plaque (36) isolante est interposée entre le fond (30) et l'élément résistif (12) comme représenté en figure 3, ainsi qu'entre l'élément résistif (12) et le couvercle (32). Par ailleurs, une matière de remplissage non conductrice de l'électricité peut être injectée ou coulée dans le boîtier précité, cette matière de remplissage ayant une bonne tenue en température et un coefficient de dilatation thermique compatible avec ceux des autres éléments du dispositif.

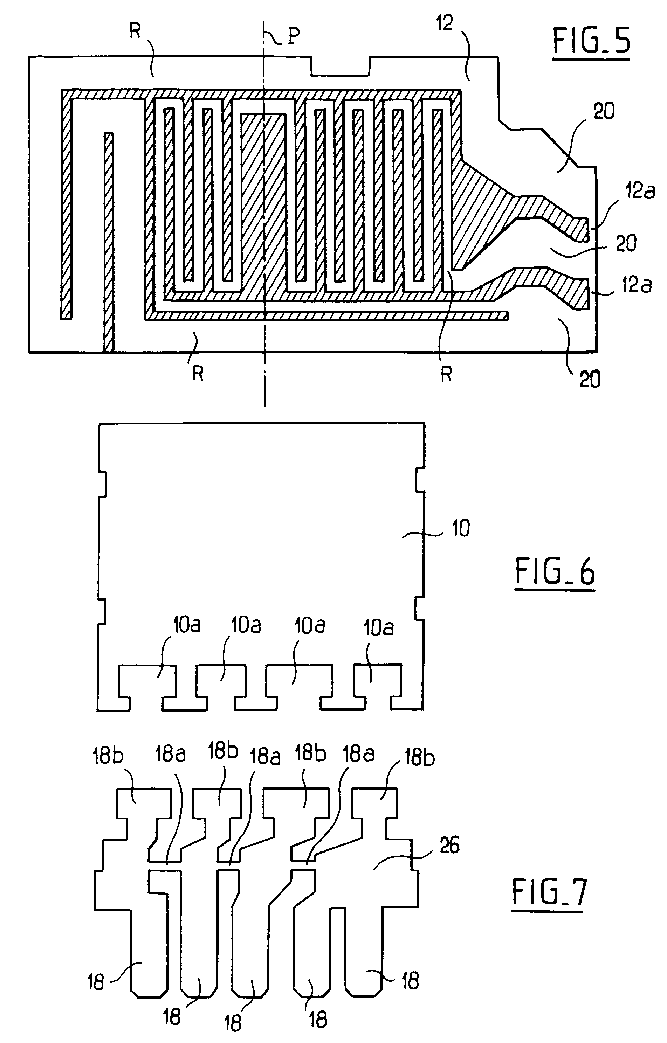

La figure 5 est une vue en plan d'un exemple de feuille résistive (12) qui a été découpée dans les régions hachurées pour laisser subsister des segments résistifs (R) provisoirement solidarisés sur un bord de la feuille par des ponts (12a) qui seront supprimés ou coupés lorsque la feuille résistive aura été mise en place. De préférence, cette élimination ou cette coupure est réalisée après complète réalisation du dispositif. Pour l'exemple la ligne P sur la feuille représente la ligne de pliage de la feuille autour du support.

La figure 6 est une vue en plan d'un exemple d'une plaque de support (10) isolante ou rendue isolante et qui présente sur un bord des échancrures (10a) pour recevoir des talons (18b) de forme complémentaire formés sur un bord d'une plaquette (26) (fig.7) en matière électro-conductrice dont le bord opposé est découpé pour former des bornes de jonction (18). Des ponts de matière (18a) solidarisent les éléments découpés et seront supprimés ou coupés lorsque la plaquette aura été mise en place par encastrement des talons (18b) dans les échancrures (10a). De préférence cette suppression sera effectuée après complète réalisation du dispositif.

Avantageusement, les talons (18b) sont fixés, par exemple par soudure ou brasage, aux pattes de jonction des segments résistifs ayant suppression des ponts tels que (12a) en sorte que la feuille résistive (12) et la plaquette conductrice (20) constituent un ensemble manipulable comme tel.

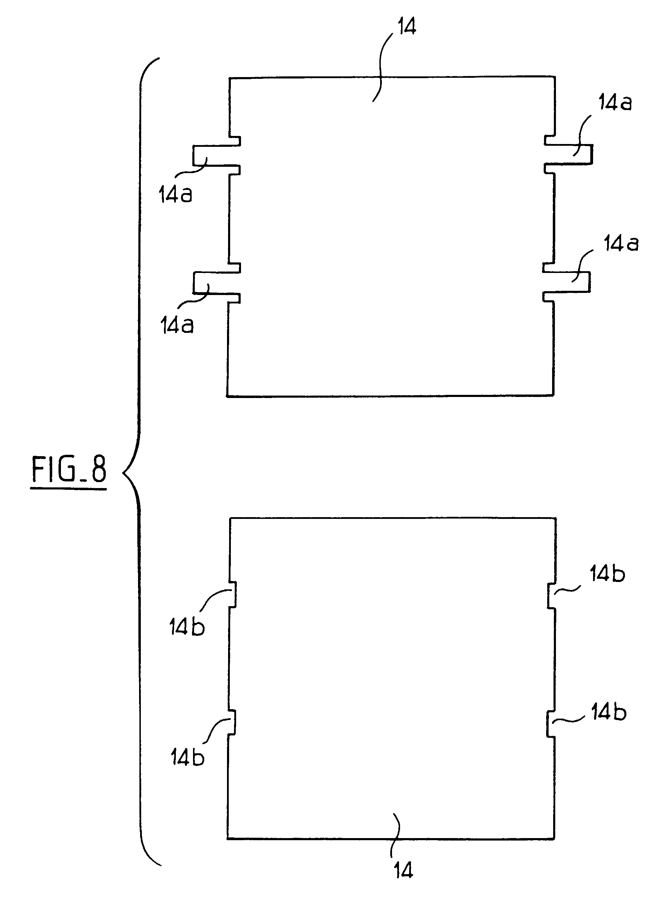

La figure 8 représente un exemple de deux plaques de protection (14), l'un présentant des pattes latérales (14a) et l'autre des échancrures (14b) en sorte qu'après mise en place de ces plaques de part et d'autre du support isolant muni des segments résistifs, les pattes d'une plaque puissent être coudées pour passer dans les échancrures de l'autre plaque et être repliées sur cette autre plaque, pour fermer le boîtier.

Des éléments du type de ceux des figures 5 à 8 permettent de réaliser un dispositif particulièrement simple dans lequel la feuille résistive (12) est soudée à la feuille conductrice (26), les talons de la feuille conductrice sont encastrées dans le support isolant (10), la feuille résistive est pliée sur le support pour le chevaucher, les plaques de fermeture (14 ; 14') sont mises en place et fixées l'une à l'autre pour former un boîtier, et les ponts sont supprimés.

L'invention n'est pas limitée aux réalisations qui ont été décrites.

## Revendications

1. Dispositif plat à résistance électrique, en particulier pour l'alimentation d'un moteur électrique, qui comprend une plaque de support (10) présentant au moins une face isolante, un circuit résistif constitué de segments résistifs (R) appliqué sur cette face, des bornes de connexion électrique (18) en liaison électrique avec les segments résistifs et des moyens (14 ; 24) pour protéger du milieu environnant le circuit résistif appliqué sur la plaque de support, en laissant les bornes de connexion apparentes, caractérisé en ce que chaque segment résistif (R) est découpé dans une feuille (12) de matière résistive.

2. Dispositif selon la revendication 1, dans lequel chaque segment résistif comporte un rétrécissement local (22) constituant un fusible d'intensité pour ce segment.

3. Dispositif selon la revendication 1 ou 2, dans lequel les segments résistifs (R) forment des pattes de connexion (20) aptes à être appliquées sur les bornes de connexion et à leur être fixées.

4. Dispositif selon l'une des revendications 1 à 3, dans lequel les segments résistifs (R) sont découpés dans une même feuille (12) et restent solidarisés par des ponts de matière (12a) aptes à être coupés après assemblage du dispositif.

5. Dispositif selon l'une des revendications 1 à 4, dans lequel la plaque de support (10) est constituée par une plaque métallique recouverte au moins sur ladite face d'un revêtement isolant.

6. Dispositif selon la revendication 5, dans lequel la plaque de support (10) est enrobée d'un revêtement isolant.

7. Dispositif selon la revendication 5 ou 6, dans lequel le revêtement isolant est un émail.

8. Dispositif selon l'une des revendications 1 à 3, dans lequel la plaque de support (10) est en oxyde d'alumine.

9. Dispositif selon l'une des revendications 1 à 7, dans lequel chaque face de la plaque de support (10) est isolante et certains au moins des segments résistifs (R) sont repliés pour chevaucher les deux faces isolantes.

10. Dispositif selon l'une des revendications 1 à 7, dans lequel chaque face de la plaque de support (10) est isolante et des segments résistifs (R) sont appliqués les uns sur une face de la plaque de support et les autres sur la face opposée de cette plaque.

11. Dispositif selon l'une des revendications 1 à 10, dans lequel les segments résistifs (R) sont soudés ou brasés individuellement aux bornes de connexion (18) respectives.

12. Dispositif selon l'une des revendications 1 à 11, dans lequel le circuit résistif en place sur la plaque de support est protégé du milieu environnant par un recouvrement (24) de matière et résistant à la chaleur.

13. Dispositif selon la revendication 12, dans lequel ledit recouvrement enrobe le dispositif à l'exception des bornes de connexion.

14. Dispositif selon la revendications 12 ou 13, dans lequel ledit recouvrement (24) est un ciment réfractaire.

15. Dispositif selon l'une des revendications 1 à 11, dans lequel le circuit résistif appliqué sur la plaque de support est protégé du milieu environnant par une plaque de protection (14).

16. Dispositif selon la revendication 15 et qui comprend deux telles plaques de protection (14) fixées l'une à l'autre pour constituer un boîtier contenant la plaque de support (10) et les segments résistifs (R) à l'exception des bornes de connexion (18).

17. Dispositif selon la revendication 15 ou 16, dans lequel la plaque de protection (14) est une plaque métallique revêtue d'un revêtement électrique isolant.

18. Dispositif selon l'une des revendications 1 à 17, dans lequel la plaque support (10) porte localement sur une face isolante un revêtement électro-conducteur pour constituer lesdites bornes de connexion (18).

19. Dispositif selon la revendication 18, dans lequel ledit revêtement électro-conducteur est constitué par des bandes (18) de matière électro-conductrice.

20. Dispositif selon la revendication 18 ou 19, dans lequel ledit revêtement est appliqué sur des languettes (16) formées dans la plaque de support (10).

21. Dispositif selon l'une des revendications 1 à 18, dans lequel les bornes de connexion (18) sont constituées dans une plaque (26) de matière électro-conductrice où elles restent solidarisées par des ponts de matière (18a) qui sont aptes à être rompus après assemblage du dispositif.

22. Dispositif selon l'une des revendications 1 à 21, dans lequel les bornes de connexion électriques (18) sont encastrées dans des échancrures isolantes (10a) de la plaque de support (10).
